# EUROPEAN PATENT APPLICATION

(11) **EP 4 640 534 A1**
(43) Date of publication of application: **29.10.2025**
(21) Application number: 24172506.8
(22) Date of filing: 25.04.2024
(51) Int. Cl.: B62D 35/00

(54) **AERODYNAMIC SKIRT AND VEHICLE**

(71) Applicant: ZF CV Systems Europe BV, 1170 Brüssel (BE)
(72) Inventor: Pochojka, Adrian, 53-235 Wroclaw (PL)
(74) Representative: Ohlendorf, Henrike

(57) **Abstract**

The disclosure relates to an aerodynamic skirt (12) for a vehicle (10), in particular for a trailer (18) or a tractor-trailer-combination (14). The aerodynamic skirt (12) comprises a mounting orientation (28) defining an orientation (30) of the aerodynamic skirt (12) with respect to a driving direction (26) of the vehicle (10). The aerodynamic skirt (12) comprises a panel (32), which is arranged at least essentially vertically when the aerodynamic skirt (12) is mounted in the mounting orientation (28). The panel (32) comprises a bottom end (34) with respect to the mounting orientation (28). The aerodynamic skirt (12) comprises a protrusion (36) at the bottom end (34) of the aerodynamic skirt (12). The protrusion (36) is arranged transversally with respect to the panel (32).

## Description

The invention relates to an aerodynamic skirt for a vehicle and to a vehicle.

An aerodynamic skirt for a trailer, also known as a trailer skirt or side fairing, is a device attached to the sides and sometimes the rear of a vehicle, such as a semi-trailer truck. It serves the purpose of reducing aerodynamic drag, which in turn improves fuel efficiency and reduces emissions.

These skirts are typically made of lightweight, flexible materials such as plastic or composite materials. They extend downward from the bottom of a chassis of the trailer, creating a smooth surface that helps to direct airflow around the trailer more efficiently. By reducing the turbulence created by air hitting the underside of the trailer and the gap between the trailer and the road, aerodynamic skirts help to decrease the drag force acting on the vehicle.

The reduction in aerodynamic drag results in less energy required to propel the truck forward, leading to improved fuel efficiency. This is particularly important for long-haul trucking operations where fuel costs represent a significant portion of operating expenses. Improved fuel efficiency means reduced carbon dioxide emissions and other pollutants associated with burning fossil fuels. This helps companies meet environmental regulations and reduce their carbon footprint. Lower fuel consumption translates to cost savings for trucking companies over the long term. Despite the initial investment in purchasing and installing aerodynamic skirts, the fuel savings often outweigh the upfront costs, resulting in a positive return on investment. In some regions, there are regulations mandating the use of aerodynamic devices on commercial trucks to improve fuel efficiency and reduce emissions. Therefore, using aerodynamic skirts ensures compliance with these regulations.

Existing solutions are based mainly on straight skirts in a form of one single element or multiple segments without any additional elements attached to them. Sometimes, the aerodynamic skirts are corrugated to add stiffness. However, the aerodynamics are still not ideal.

It is an object of the invention to improve the aerodynamics of a vehicle, in particular of a trailer or a tractor-trailer combination.

The object is achieved by an aerodynamic skirt in accordance with claim 1.

The aerodynamic skirt is configured for a vehicle, in particular for a trailer or a tractor-trailer-combination. The aerodynamic skirt comprises a mounting orientation defining an orientation of the aerodynamic skirt with respect to a driving direction of the vehicle. The aerodynamic skirt comprises a panel, which is arranged at least essentially vertically when the aerodynamic skirt is mounted in the mounting orientation. The panel comprises a bottom end with respect to the mounting orientation. The aerodynamic skirt comprises a protrusion at the bottom end of the aerodynamic skirt, wherein the protrusion is arranged transversally with respect to the panel.

The inventor has discovered that existing aerodynamic skirts have a remaining drawback in that air tends to wrap around the bottom edge of the aerodynamic skirt, which increases the amount of air that flows under the vehicle and adds pressure to the vehicle chassis and wheels. The effect is similar to the situation at a wingtip of a plane, which creates a vortex of flowing air. The amount of air that flows beneath the aerodynamic skirt's bottom edge is increased due to the pressure difference between upwind and downwind side of the aerodynamic skirt. As a result of this pressure difference, a strong vortex wraps around the edge. The vortex causes the fresh air from outside to flow beneath the bottom edge of the panel and under the vehicle. This eventually increases the pressure at the chassis and wheels of the trailer, which increases the drag.

The protrusion has an effect that is similar to the effect of a device known in aerospace engineering called winglet or sharklet. That is, the protrusion reduces the vortex and, thus, reduces the amount of air flowing beneath the panel's bottom end and under the vehicle. This reduces the pressure against the chassis and the wheels and, thus, reduces the vehicle's overall resistance to airflow. This increases fuel efficiency.

According to an embodiment, the protrusion is formed by a plate, which is arranged transversally with respect to the panel. A plate is a simple and yet effective kind of protrusion. The plate can form an endplate of the aerodynamic skirt.

According to an embodiment, the protrusion is segmented with respect to the driving direction. This provides for an effective reduction of air flow under the vehicle, while only a small amount of material needs to be provided for the protrusion.

According to an embodiment, the protrusion is formed continuously with respect to the driving direction. This provides for an effective reduction of airflow under the vehicle, while manufacturing and handling of the aerodynamic skirt are simple.

The protrusion is generally arranged at an angle with respect to the panel, as the protrusion is arranged transversally with respect to the panel. The angle can in particular be larger than 45°, in particular larger than 70°, in particular larger than 85°. In an embodiment, the protrusion is arranged at least essentially orthogonally with respect to the panel and/or essentially horizontally when the aerodynamic skirt is mounted in the mounting orientation. This provides for an effective reduction of airflow under the vehicle.

The protrusion can generally be an inward protrusion or an outward protrusion with respect to the mounting orientation. An aerodynamic skirt is typically arranged at a peripheral position at the vehicle. Thus, the terms "inward" and "outward" refer to a direction from the peripheral position towards a center of the vehicle and a direction from the peripheral position away from the center of the vehicle, respectively.

According to an embodiment, the aerodynamic skirt comprises an inward protrusion and an outward protrusion, both arranged at the bottom end of the panel and arranged transversally with respect to the panel. This further reduces the amount of air flowing under the vehicle. All embodiments described with respect to one protrusion can apply - where meaningful - to either one of the inward protrusion and the outward protrusion or to both the inward protrusion and the outward protrusion.

The inward protrusion and the outward protrusion can be configured symmetrically or asymmetrically with respect to the panel. Symmetrically arranged protrusions provide for a simple construction. Asymmetrically arranged protrusions provide for a more sophisticated manipulation of the airflow.

According to an embodiment, the panel comprises a length with respect to the driving direction, the protrusion comprises a length with respect to the driving direction, and the length of the protrusion is smaller than the length of the panel. This provides for an effective reduction of air flow under the vehicle, while only a small amount of material needs to be provided for the protrusion. A ratio of the length of the protrusion and the length of the panel can in particular be at least 1/5, in particular at least 1/3, in particular at least 2/3. A ratio of the length of the protrusion and the length of the panel can in particular be at most 4/5, in particular at most 2/3, in particular at most 1/3.

The protrusion can, for example, be positioned at a front end of the panel, at a rear end of the panel, or spaced apart from both a front end of the panel and a rear end of the panel.

According to another embodiment, the protrusion extends along a full length of the panel. This provides for an effective reduction of air flow under the vehicle.

According to an embodiment, the panel comprises a first portion, which is arranged at least essentially in parallel to the driving direction. This further reduces airflow under the vehicle.

According to an embodiment, the panel comprises a second portion, which converges forwardly with respect to the driving direction. This further reduces airflow under the vehicle.

The ordinal numbers used herein merely simplify reference and are not limiting with respect to the total number of elements for which the ordinal numbers are used. In particular, the existence of the second portion does not necessarily mean that a first portion arranged at least essentially parallel to a driving direction exists.

According to an embodiment, the protrusion is attached to the panel by a welded connection. This provides for a simple and yet solid connection.

According to an embodiment, the protrusion is formed as one piece with the panel. According to an embodiment, the protrusion is formed by cold forming, in particular by bending. These embodiments provide for simple and yet solid connections.

The object is also achieved by a vehicle in accordance with claim 13. The vehicle can in particular be a trailer or a tractor-trailer combination. The vehicle comprises an aerodynamic skirt as described above.

The vehicle can comprise a chassis. According to an embodiment, the aerodynamic skirt is positioned under the chassis. This provides for an advantageous aerodynamic setup.

The vehicle can comprise a rear axle aggregate, which comprises at least one axle. According to an embodiment, the aerodynamic skirt is positioned in front of the rear axle aggregate with respect to the driving direction. This provides for an advantageous aerodynamic setup.

The vehicle can be, for example, a commercial vehicle, a truck, a passenger car or a bus. The vehicle can be, for example, a road vehicle or a rail vehicle. The vehicle can be, for example, a single vehicle, a tractor for a tractor-trailer combination, a trailer for a tractor-trailer combination, or a tractor-trailer combination. The trailer of or for the tractor-trailer combination can, for example, be a semi-trailer or a full trailer.

The invention is described in more detail below with reference to examples, which are shown in schematic drawings.
Fig. 1 shows a vehicle comprising an aerodynamic skirt in a side view.
Fig. 2 shows the vehicle of Fig. 1 in a perspective view.
Fig. 3 shows the vehicle of Figs. 1-2 in another perspective view.
Fig. 4 shows the vehicle of Figs. 1-3 in another perspective view.
Fig. 5 shows the vehicle of Figs. 1-4 in another perspective view.
Fig. 6 shows the vehicle of Figs. 1-5 in another perspective view.
Fig. 7 shows an aerodynamic skirt.
Fig. 8 shows an aerodynamic skirt.
Fig. 9 shows an aerodynamic skirt.
Fig. 10 shows an aerodynamic skirt.
Fig. 11 shows an aerodynamic skirt.
Fig. 12 shows an aerodynamic skirt.
Fig. 13 shows an aerodynamic skirt.
Fig. 14 shows an aerodynamic skirt.
Fig. 15 shows an aerodynamic skirt.

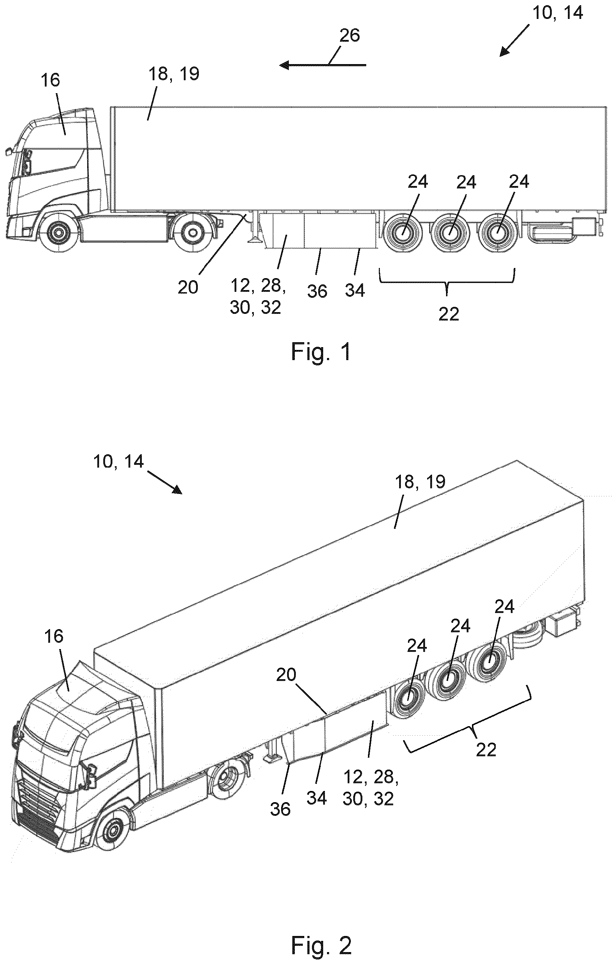

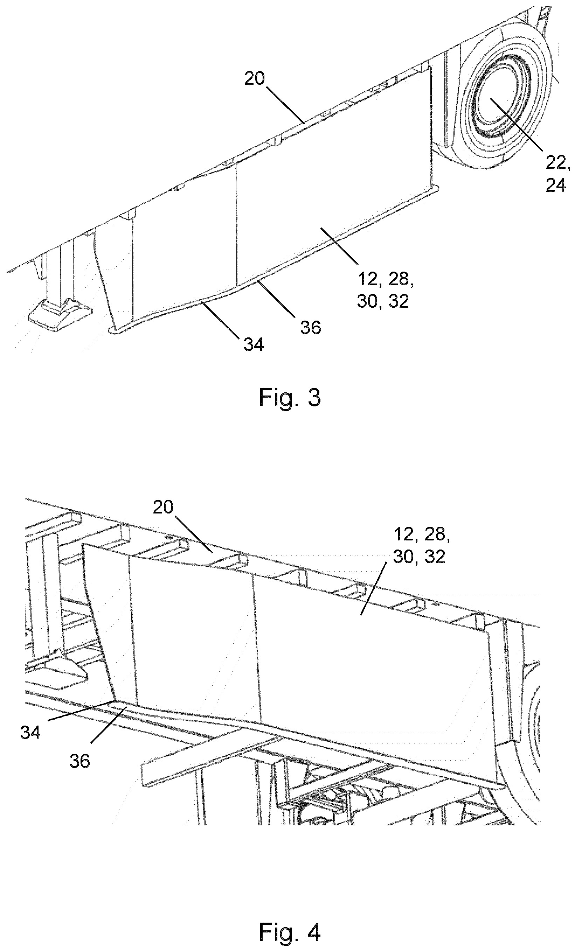

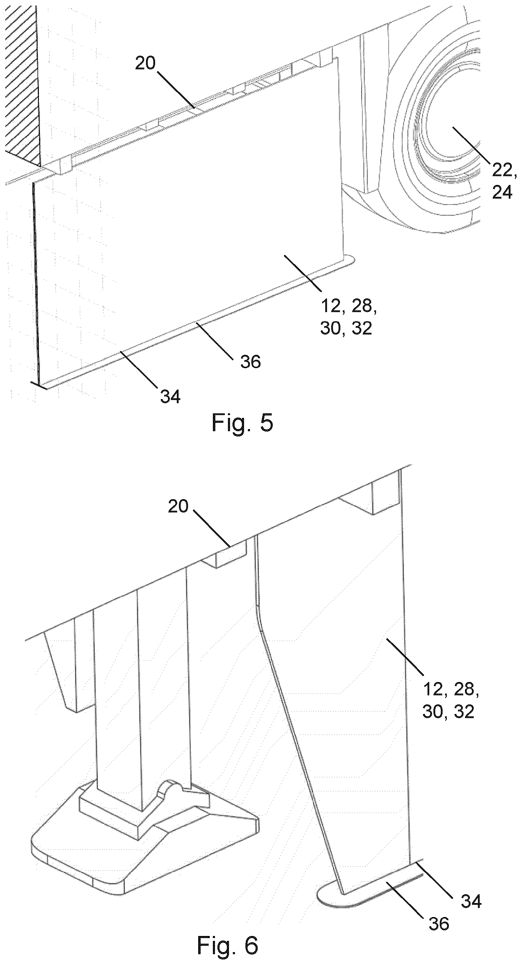

Figs. 1 to 6 show different views of a vehicle 10 comprising an aerodynamic skirt 12. Figs. 1 to 6 will be described together unless reference is made to a specific one of Figs. 1 to 6.

The vehicle 10 of Figs. 1 to 6 is, in this example, configured as a tractor-trailer combination 14 and comprises a tractor 16 and a trailer 18. Specifically, the trailer 18 is configured as a semi-trailer 19 in this example.

The vehicle 10 comprises a chassis 20, wherein the aerodynamic skirt 12 is positioned under this chassis 20.

The vehicle 10 comprises a rear axle aggregate 22. The rear axle aggregate 22 comprises, in this example, three axles 24. The aerodynamic skirt 12 is positioned in front of the rear axle aggregate 22 with respect to a driving direction 26 of the vehicle 10 indicated as an arrow in Fig. 1.

The aerodynamic skirt 12 of the vehicle 10 of Figs. 1 to 6 comprises a mounting orientation 28 as shown defining an orientation 30 of the aerodynamic skirt 12 with respect to a driving direction 26 of the vehicle 10.

The aerodynamic skirt 12 comprises a panel 32, which is arranged at least essentially vertically when the aerodynamic skirt 12 is mounted in the mounting orientation 28 as shown. The panel 32 comprises a bottom end 34 with respect to the mounting orientation 28. The aerodynamic skirt 12 comprises a protrusion 36 at the bottom end 34 of the aerodynamic skirt 12. The protrusion 36 is arranged transversally with respect to the panel 32.

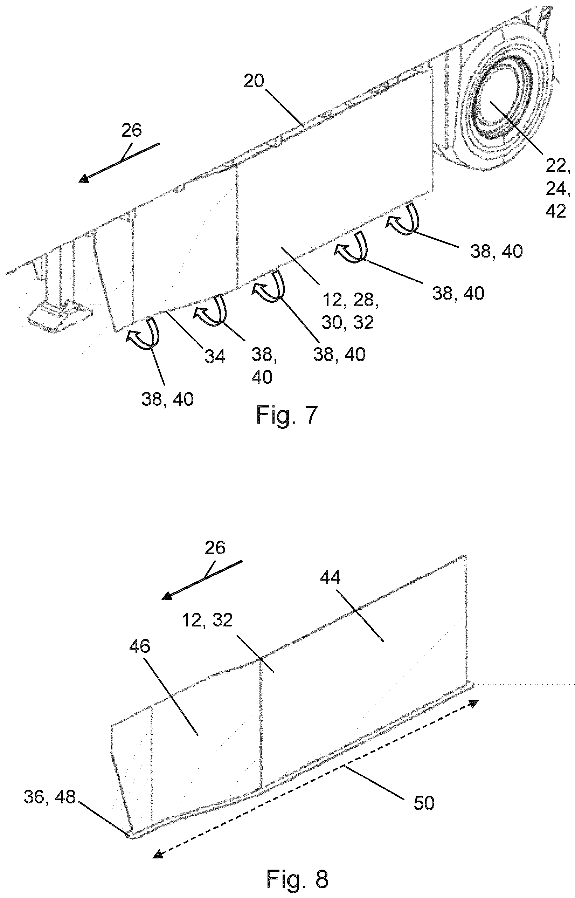

Fig. 7 shows a vehicle 10 comprising an aerodynamic skirt 12, which comprises a mounting orientation 28 defining an orientation 30 of the aerodynamic skirt 12 with respect to a driving direction 26 of the vehicle 10. The aerodynamic skirt 12 comprises a panel 32, which is arranged at least essentially vertically when the aerodynamic skirt 12 is mounted in the mounting orientation 28. The panel 32 comprises a bottom end 34 with respect to the mounting orientation 28. Thus, the aerodynamic skirt 12 of Fig. 7 is similar to the one shown in Figs. 1 to 6 but differs in that there is no protrusion at the bottom end 34 of the panel 32.

The aerodynamic skirt 12 of Fig. 7 without a protrusion has a drawback in that air 38 wraps around the bottom end 34 of the aerodynamic skirt 12 and increases the amount of air 38 that flows under the vehicle 10 and adds pressure to the vehicle chassis 20 and wheels 42. The effect is similar to the situation at a wingtip of a plane, which creates a vortex. The amount of air 38 that flows beneath the bottom end 34 of the aerodynamic skirt 12 is increased due to the pressure difference between the upwind and downwind sides of the aerodynamic skirt 12. As a result of this pressure difference, a vortex 40 wraps around the bottom end 34. The vortex 40 causes the fresh air 38 from outside to flow beneath the bottom end 34 of the panel 32 and under the vehicle 10. This eventually increases the pressure on the chassis 20 and wheels 42 of the vehicle 10, which increases the vehicle's overall resistance to headwind.

The protrusion 36 shown in Figs. 1-6 has an effect that is similar to the effect of a device known in aerospace engineering called winglet or sharklet. That is, the protrusion 36 reduces the vortex 40 and, thus, reduces the amount of air 38 flowing beneath the bottom end 34 of the panel 32 and under the vehicle 10. This reduces the pressure against the chassis 20 and the wheels 42 and, thus, the overall resistance to headwind.

Fig. 8 shows an aerodynamic skirt 12, which comprises a similar configuration to the one of Figs. 1 to 6. A panel 32 of the aerodynamic skirt 12 comprises a first portion 44, which is arranged at least essentially parallel to a driving direction 26. The panel 32 comprises a second portion 46, which converges forwardly with respect to the driving direction 26.

The aerodynamic skirt 12 of Fig. 8 comprises a protrusion 36 that is formed by a plate 48, which is arranged transversely with respect to the panel 32. In this example, the plate 48 is arranged horizontally, i.e. orthogonally with respect to the panel 32.

The protrusion 36 of the aerodynamic skirt 12 of Fig. 8 extends along a full length 50 of the panel 32.

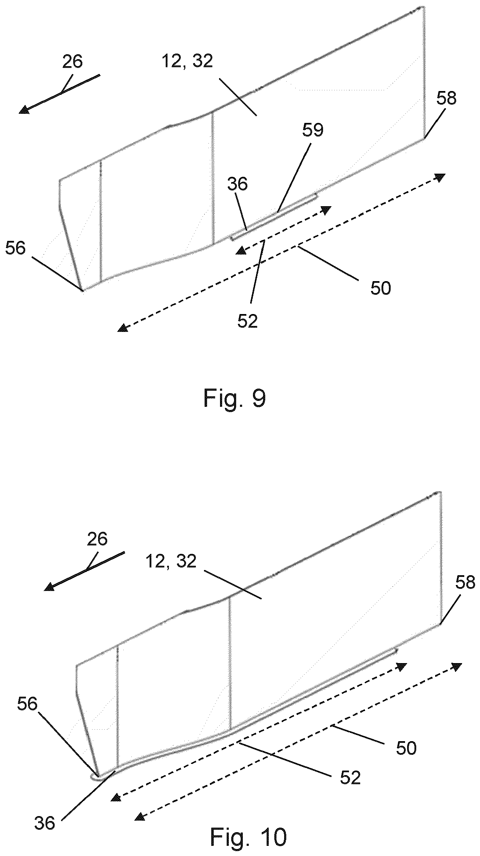

Figs. 9 and 10 each show an aerodynamic skirt 12, wherein the panel 32 comprises a length 50 with respect to the driving direction 26, wherein the protrusion 36 comprises a length 52 with respect to the driving direction 26, wherein the length 52 of the protrusion 36 is smaller than the length 50 of the panel 32. A ratio of the length 52 of the protrusion 36 and the length 50 of the panel 32 can in particular be at least 1/5, in particular at least 1/3, in particular at least 2/3. The ratio of the length 52 of the protrusion 36 and the length 50 of the panel 32 can in particular be at most 4/5, in particular at most 2/3, in particular at most 1/3.

The protrusion 36 can be positioned at a front end 56 of the panel 32, at a rear end 58 of the panel 32, or spaced apart from both a front end 56 of the panel 32 and a rear end 58 of the panel 32.

In the example shown in Fig. 9, the ratio of the length 52 of the protrusion 36 and the length 50 of the panel 32 is about 2/7 or 0.28, i.e., above 1/5 and below 1/3. In Fig. 9, the protrusion 36 is spaced apart from both the front end 56 of the panel 32 and the rear end 58 of the panel 32. The protrusion 36 is positioned essentially at a center 59 of the panel 32 with respect to the driving direction 26.

In the example of Fig. 10, the ratio of the length 52 of the protrusion 36 and the length 50 of the panel 32 is about 9/10 or 0,90. The protrusion 36 of Fig. 10 is positioned at a front end 56 of the panel 32.

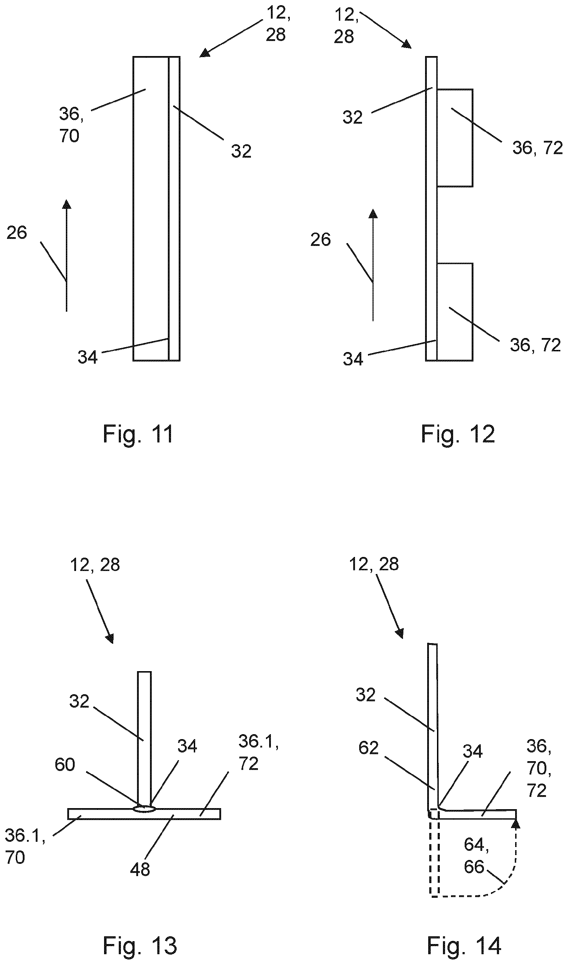

Fig. 11 shows an aerodynamic skirt 12 from the top when mounted in the mounting orientation. A protrusion 36 arranged at a bottom end 34 of a panel 32 of the aerodynamic skirt 12 is formed continuously with respect to the driving direction 26.

Fig. 12 shows an aerodynamic skirt 12 from the top when mounted in the mounting orientation. A protrusion 36 arranged at a bottom end 34 of a panel 32 of the aerodynamic skirt 12 is segmented with respect to the driving direction 26.

Fig. 13 shows an aerodynamic skirt 12 having a first protrusion 36.1 and a second protrusion 36.2, wherein the protrusions 36 are attached to the panel 32 by a welded connection 60. In this example, the protrusions 36 are formed by a plate 48.

Fig. 14 shows an aerodynamic skirt 12 having a protrusion 36 that is formed as one piece 62 with the panel 32, for example by cold forming 64, in particular by bending 66.

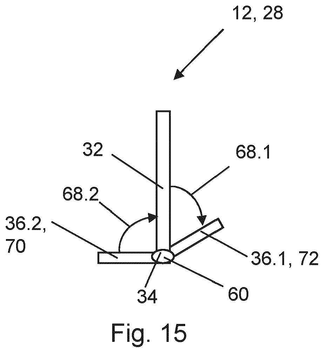

In general, the protrusion 36 is arranged transversally and, thus, at an angle with respect to the panel 32. The angle is indicated in Fig. 15 as angle 68. Fig. 15 shows an aerodynamic skirt 12 having a first protrusion 36.1 that is arranged at an angle 68.1 with respect to the panel 32. The angle 68.1 is about 60° in this example. The aerodynamic skirt 12 comprises a second protrusion 36.2 that is arranged at an angle 68.2 of 90° with respect to the panel 32, i.e. orthogonally with respect to the panel 32, and horizontally when the aerodynamic skirt 12 is mounted in the mounting orientation 28.

In general, the aerodynamic skirt 12 can comprise different numbers and kinds of protrusions, for example protrusions 36 such as shown in Figs. 8 to 15. The protrusion 36 of an aerodynamic skirt 12 can be an inward protrusion 70 or an outward protrusion 72 with respect to the mounting orientation 28.

The aerodynamic skirts 12 of Figs. 13 and 15, for example, each comprise an inward protrusion 70 and an outward protrusion 72, both arranged at the bottom end 34 of the panel 32 and arranged transversally with respect to the panel 32. In Fig. 13, the inward protrusion 70 and the outward protrusion 72 of the aerodynamic skirt 12 are configured symmetrically with respect to the panel 32. In Fig. 15, the inward protrusion 70 and the outward protrusion 72 of the aerodynamic skirt 12 are configured asymmetrically with respect to the panel 32.

The aerodynamic skirts 12 of Figs. 11, 12, and 14, for example, each comprise a protrusion 36 only to one side of the panel 32, i.e. either an inward projection 70 and an outward projection 72.

As will be apparent, in Figs. 11 to 15 the inward protrusion 70 is oriented toward the left of the panel 32 and the outward protrusion 72 is oriented to the right of the panel 32, but this convention is used here for the sake of simplicity and the shown aerodynamic skirts 12 could be configured the opposite way.

Where similar or identical elements are shown in different figures, reference numerals are assigned accordingly. Multiple descriptions of similar or identical elements have been avoided for the sake of clarity. Nevertheless, the embodiments of the figures can be combined with each other and developed further in accordance with the other embodiments and/or their individual features.

### List of references (part of the description)

- 10: vehicle
- 12: aerodynamic skirt
- 14: tractor-trailer-combination
- 16: tractor
- 18: trailer
- 19: semi-trailer
- 20: chassis
- 22: rear axle aggregate
- 24: axle
- 26: driving direction
- 28: mounting orientation
- 30: orientation
- 32: panel
- 34: bottom end
- 36: protrusion
- 38: air
- 40: vortex
- 42: wheels
- 44: first portion
- 46: second portion
- 48: plate
- 50: length of the panel
- 52: length of the protrusion
- 56: front end
- 58: rear end
- 59: center
- 60: welded connection
- 62: piece
- 64: cold forming
- 66: bending
- 68: angle
- 70: inward protrusion
- 72: outward protrusion

## Claims

1. Aerodynamic skirt (12) for a vehicle (10), in particular for a trailer (18) or a tractor-trailer-combination (14),
the aerodynamic skirt (12) comprising
a mounting orientation (28) defining an orientation (30) of the aerodynamic skirt (12) with respect to a driving direction (26) of the vehicle (10),
wherein the aerodynamic skirt (12) comprises a panel (32), which is arranged at least essentially vertically when the aerodynamic skirt (12) is mounted in the mounting orientation (28),
wherein the panel (32) comprises a bottom end (34) with respect to the mounting orientation (28),
**characterized in that**
the aerodynamic skirt (12) comprises a protrusion (36) at the bottom end (34) of the aerodynamic skirt (12), wherein the protrusion (36) is arranged transversally with respect to the panel (32).

2. Aerodynamic skirt (12) according to claim 1,
wherein the protrusion (36) is formed by a plate (48), which is arranged transversally with respect to the panel (32).

3. Aerodynamic skirt (12) according to one of the preceding claims,
wherein the protrusion (36) is segmented with respect to the driving direction (26).

4. Aerodynamic skirt (12) according to one of claims 1 and 2,
wherein the protrusion (36) is formed continuously with respect to the driving direction (26).

5. Aerodynamic skirt (12) according to one of the preceding claims,
wherein the protrusion (36) is arranged at an angle (68) with respect to the panel (32), wherein the angle (68) is larger than 45°, in particular larger than 70°, in particular larger than 85°, in particular wherein the protrusion (36) is arranged at least essentially orthogonally with respect to the panel (32) and/or essentially horizontally when the aerodynamic skirt (12) is mounted in the mounting orientation (28).

6. Aerodynamic skirt (12) according to one of the preceding claims,
wherein the protrusion (36) is an inward protrusion (70) or an outward protrusion (72) with respect to the mounting orientation (28).

7. Aerodynamic skirt (12) according to one of the preceding claims,
wherein the aerodynamic skirt (12) comprises an inward protrusion (70) and an outward protrusion (72), both arranged at the bottom end (34) of the panel (32) and arranged transversally with respect to the panel (32).

8. Aerodynamic skirt (12) according to claim 7,
wherein the inward protrusion (70) and the outward protrusion (72) are configured symmetrically or asymmetrically with respect to the panel (32).

9. Aerodynamic skirt (12) according to one of the preceding claims,
wherein the panel (32) comprises a length (50) with respect to the driving direction (26),
wherein the protrusion (36) comprises a length (52) with respect to the driving direction (26),
wherein the length (52) of the protrusion (36) is smaller than the length (50) of the panel (32),
in particular wherein a ratio of the length (52) of the protrusion (36) and the length (50) of the panel (52) is at least 1/5 and/or
in particular wherein a ratio of the length (52) of the protrusion (36) and the length (50) of the panel (32) is at most 4/5,
in particular wherein the protrusion (36) is positioned at a front end (56) of the panel (32), at a rear end (58) of the panel (32), or spaced apart from both a front end (56) of the panel (32) and a rear end (58) of the panel (32).

10. Aerodynamic skirt (12) according to one of the claims 1 to 8,
wherein the protrusion (36) extends along a full length (50) of the panel (32).

11. Aerodynamic skirt (12) according one of the preceding claims,
wherein the panel (32) comprises a first portion (44), which is arranged at least essentially in parallel to the driving direction (26) and/or
wherein the panel (32) comprises a second portion (46), which converges forwardly with respect to the driving direction (26).

12. Aerodynamic skirt (12) according one of the preceding claims,
wherein the protrusion (36) is attached to the panel (32) by means of a welded connection (60) and/or
wherein the protrusion (36) is formed as one piece (62) with the panel (32) and/or by cold forming (64), in particular by bending (66).

13. Vehicle (10), in particular a trailer (18) or a tractor-trailer combination (14), comprising an aerodynamic skirt (12) according to one of the preceding claims.

14. Vehicle (10) according to claim 13,
wherein the vehicle (10) comprises a chassis (20),
wherein the aerodynamic skirt (12) is positioned under the chassis (20).

15. Vehicle (10) according to claim 13 or 14,
wherein the vehicle (10) comprises a rear axle aggregate (22), which comprises at least one axle (24),
wherein the aerodynamic skirt (12) is positioned in front of the rear axle aggregate (22) with respect to the driving direction (26).
